# EUROPÄISCHE PATENTSCHRIFT

(11) **EP 0 783 391 B1**
(45) Veröffentlichungstag und Bekanntmachung des Hinweises auf die Patenterteilung: **09.12.1998**
(21) Anmeldenummer: 95935390.5
(22) Anmeldetag: 27.09.1995
(51) Int. Cl.: B23K 3/02, B23K 3/06

(54) **HANDLÖTGERÄT MIT AUFNAHMEKAMMERN**
MANUAL SOLDERING TOOL WITH ACCEPTANCE CHAMBERS
APPAREIL MANUEL DE BRASAGE AVEC COMPARTIMENTS DE LOGEMENT

(30) Priorität: 01.10.1994 DE 4435323
(43) Veröffentlichungstag der Anmeldung: 16.07.1997
(73) Patentinhaber: Feinler, Siegfried, 78549 Spaichingen (DE)
(72) Erfinder: Feinler, Siegfried, 78549 Spaichingen (DE)
(74) Vertreter: Neymeyer, Franz, Dipl.-Ing. (FH)
(86) Internationale Anmeldenummer: EP9503820
(87) Internationale Veröffentlichungsnummer: WO9610467

(56) Entgegenhaltungen:
- FR-A- 2 637 520
- US-A- 4 187 972
- US-A- 5 031 817
- US-A- 5 143 272
- US-A- 5 151 574

## Beschreibung

Die Erfindung betrifft ein Handlötgerät gemäß dem oberbegriff des Ansprüchs 1.

Es ist ein Handlötgerät der gattungsgemäßen Art bekannt (FR 2 637 520 A1), welches in etwa stabförmig ausgebildet ist und zwei Aufnahmekammern aufweist. Eine der Aufnahmekammern ist als Lotkammer ausgebildet und dient zur Aufnahme von Lötwerkstoff. Die Lotkammer ist etwa zylindrisch ausgebildet und weist einen Preßkolben auf, welcher federbelastet in der Lotkammer verschiebbar ist. Die Lotkammer ist desweiteren im Bereich einer Heizvorrichtung angeordnet, welche zum Aufheizen sowohl der Lötspitze als auch der Lotkammer auf eine vorbestimmte Löttemperatur dient. Der durch die Heizvorrichtung in der Lotkammer aufgeheizte und verflüssigte Lötwerkstoff gelangt über ein manuell betätigbares Zufuhrventil und über einen entsprechenden Lotzufuhrkanal, welcher die Lötspitze mit der Lotkammer verbindet zum vorderen Ende der Lötspitze. Die zweite Aufnahmekammer ist zylindrisch ausgebildet und als Vorratskammer zur Aufnahme eines Flußmittels vorgesehen, wobei sie ebenfalls einen federbelasteten Preßkolben aufweist. Über ein zweites gleichzeitig mit dem ersten Zufuhrventil der Lotkammer manuell betätigbares Zufuhrventil gelangt Flußmittel über eine separate Rohrleitung bei betätigtem Zufuhrventil zur Lötstelle. Die Rohrleitung der Vorratskammer ist dabei im Bereich des Endes der Lötspitze zur Lötspitze hin abgebogen ausgeführt, so daß das Flußmittel gleichzeitig mit dem Lötwerkstoff bei batätigten Zufuhrventilen der Lötstelle zuführbar ist. Die beiden Aufnahmekammern sind im Handlötgerät integriert angeordnet und nicht auswechselbar. Für eine Wiederbefüllung sind die Aufnahmekammern mit jeweils einer äußeren Zuführoffnung versehen, über welche in die jeweilige Aufnahmekammer jeweils Lötwerkstoff bzw. Flußmittel nachfüllbar ist. Zum Nachfüllen von Lötwerkstoff bzw. Flußmittel sind die beiden Preßkolben jeweils mittels einer Zugstange entgegen der Federkraft jeweils einer Schraubendruckfeder in ihre jeweilige Ausgangsstellung zurückziehbar. Die jeweilige Druckkraft der beiden Schraubendruckfedern ist dabei manuell mittels jeweils einer in axialer Richtung verstellbarer Einstellschraube einstellbar. Die Zugstangen des jeweiligen Preßkolbens sind dabei jeweils in einer entsprechenden Durchgangsbohrung der jeweils zugeordneten Einstellschraube angeordnet und überragen die Einstellschraube jeweils nach außen, so daß sie manuell handhabbar sind.

Das bekannte Handlötgerät ist zum einfachen Verlöten von Bauteilen vorgesehen, wobei eine Einhandbedienung des Handlötgerätes durch die gleichzeitige Zufuhr von Lötwerkstoff und Flußmittel durch das Handlötgerät selbst möglich ist. Bei manuellen Lötarbeiten kommt es jedoch häufiger vor, daß insbesondere überschüssiger Lötwerkstoff auf die Lötstelle gelangt, welcher von dieser wieder entfernt werden muß. Desweiteren sind bei Reparaturarbeiten auch teilweise einzelne Bauteile von z.B. einer Platine abzulöten und durch einen erneuten Lötvorgang durch entsprechende Ersatzteile zu ersetzen. So muß für diese Arbeitsvorgänge zum Entfernen von überschüssigem Lötwerkstoff oder zum Entlöten eine separate Absaugvorrichtung oder Entlötvorrichtung vorgesehen werden. Dies bedeutet einen erhöhten Arbeitsaufwand für das Bedienungspersonal, da zum Absaugen und zum Entlöten stets das Arbeitsgerät gewechselt werden muß. Desweiteren fallen erhöhte Investitionskosten für den Betrieb an, da für dieses Absaugen von überschüssigem Lötmaterial bzw. zum Entlöten eigens ein spezielles Absauggerät bzw. Entlötgerät bereitgestellt werden muß.
Auch ist das bekannte Handlötgerät in seiner Wartung äußerst aufwendig, und kann z.B. zu Reinigungszwecken nicht oder nur schwerlich zerlegt werden. Bei solchen bei längerem Betrieb notwendigen Reinigungsarbeiten des Handlötgerätes muß dieses aufgrund seines komplizierten Aufbaues einem speziellen Reinigungsprozeß unterzogen werden, welcher nur von speziell geschultem Personal durchführbar ist. Dabei steht das Handlötgerät für Lötarbeiten für längere Zeit nicht zur Verfügung.

Aus der US-A-5,031,817 ist ein elektrischer Lötkolben bekannt geworden, dessen kompletter Griffteil als Absaugvorrichtung zum Absaugen von Flußmittel oder Lötwerkstoff ausgebildet ist. Dazu weist der elektrische Lötkolben ein Zylinderrohr und ein Kopfteil mit einer zentralen Bohrung auf. Das Kopfteil ist an der einen vorderen Stirnseite des Zylinderrohres schwenkbar gelagert angeordnet. Am vorderen Ende des Zylinderrohres ist ein Kolben mit einer Kolbenstange vorgesehen, wobei die Kolbenstange von einer Feder umschlossen wird, welche gegen den Kolben drückt. Am hinteren Ende des Zylinderrohres ist eine Magnetspule angeordnet, welche über einen Druckknopf am hinteren Ende des Zylinderrohres aktivierbar ist. Der Kolben wird bei deaktivierter Magnetspule durch die Feder nach vorne geschoben. Durch Betätigen des Druckknopfes wird die Magentspule aktiviert und der Kolben im Zylinderrohr zurückgezogen, so daß über einen in der Lötspitze endenden Saugkanal Lötwerkstoff von der Lötstelle absaugbar ist. Mit diesem elektrischen Lötkolben sind vorhandene Lötstellen entlötbar. Es müssen aber zum Herstellen von Lötverbindungen weiterhin Flußmittel und Lötwerkstoff extern zugeführt werden, so daß zum Verlöten das Bedienungspersonal beide Hände benötigt und somit die Bauteile durch spezielle Vorrichtungen in ihrer Sollposition gehalten werden müssen.

Demgemäß liegt der Erfindung die Aufgabe zugrunde, ein Handlötgerät der eingangs genannten Art derart auszubilden, daß es ohne zusätzliche Haltevorrichtungen zur Herstellung von Lötverbindungen für zu verlötende Bauteile verwendbar ist und daß ein Entlöten und das gleichzeitige Trennen zweier Bauteile voneinander oder auch ein Entfernen von überschüssigem Lötmaterial von der Lötstelle in einfacher Weise möglich sein soll.

Erfindungsgemäß wird die Aufgabe dadurch gelöst, daß die andere der Aufnahmekammer als Saugkammer ausgebildet ist, in welche über einen Saugkanal überschüssiger Lötwerkstoff und/oder überschüssiges Flußmittel von der Lötstelle absaugbar ist, und daß zum Absaugen von Flußmittel und/oder Lötwerkstoff in der Saugkammer Mittel zur Vergrößerung des Volumens der Saugkammer vorgesehen sind, oder daß die Saugkammer zum Absaugen von Flußmittel und/oder Lötwerkstoff mit einer Vorrichtung zum Erzeugen eines Unterdruckes gekoppelt ist, und daß die Lötspitze zur gemeinsamen Aufnahme der jeweiligen Endbereiche des Zufuhrkanals und des Saugkanals vorgesehen ist..

Durch die erfindungsgemäße Ausgestaltung des Handlötgerates wird erreicht, daß das Handlötgerät mit einer Hand bedienbar ist, wobei gleichzeitig wahlweise oder in Kombination beim Lötvorgang das Zuführen von Lötwerkstoff und/oder Flußmittel und bzw. beim Entlötvorgang das Absaugen von Lötwerkstoff und Flußmittel durchführbar ist. Desweiteren ist durch die integrierte Anordnung der Aufnahmekammern im Handlötgerät dieses in seiner Größe auch relativ klein ausbildbar, so daß ein einfache und leichte Handhabbarkeit sichergestellt ist.

Durch die Ausgestaltung gemäß Anspruch 2 wird ein umweltfreundlicher Einsatz des erfindungsgemäßen Handlötgerätes erreicht, da die verbrauchten Aufnahmekammern einfach austauschbar und somit wieder befüllbar bzw. entleerbar und damit wiederverwendbar sind. Desweiteren kann das Auswechseln der Aufnahmekammern jederzeit vom Bedienungspersonal durchgeführt werden, so daß das erfindungsgemäße Handlötgerät nur kurzzeitig außer Betrieb gesetzt ist. Auch fallen damit nur geringe Wartungskosten und aber auch geringe Ausfallzeiten an, wodurch eine erhebliche Kostenersparnis im laufenden Produktionsprozeß erreichbar ist.

Durch die Ausgestaltungen gemäß der Ansprüche 3 und 4 wird erreicht, daß der in der Lotkammer befindliche Lötwerkstoff während bzw. kurz vor dem Lötvorgang in einen schmelzflüssigen Zustand bringbar ist, so daß er durch Verschieben des Preßkolbens zum Verringern des Kammervolumens der Lotkammer über den Zufuhrkanal der Lötspitze zuführbar ist. Die Vorschubbewegung des in der Lotkammer angeordneten Preßkolbens kann dabei mechanisch beispielsweise elektromotorisch oder aber auch pneumatisch bzw. hydraulisch durch Druckbeaufschlagung der Preßkolbenrückseite erfolgen. Beim Lötvorgang ist dabei das notwendige Flußmittel aus der vorgesehenen Zusatzkammer über einen zweiten Zufuhrkanal der Lötspitze zuführbar und tritt zusammen mit dem Lötwerkstoff aus der Lötspitze aus, so daß eine einwandfreie Lötstelle erreichbar ist. Der Preßkolben der Zusatzkammer ist ebenfalls mechanisch, pneumatisch oder hydraulisch zur Verringerung des Kammervolumens der Zusatzkammer in dieser verschiebbar. Dabei ist es möglich, den Preßkolben der Zusatzkammer und den Preßkolben der Lotkammer gemeinsam oder getrennt zu bewegen, so daß das Flußmittel und der Lötwerkstoff je nach den jeweils vorliegenden Arbeitsbedingungen entweder gemeinsam oder separat an die Lötstelle zuführbar sind.

Durch die Anordnung der Saugkammer außerhalb der Heizvorrichtung gemäß Anspruch 5 ist sichergestellt, daß in die Saugkammer angesaugter flüssiger Lötwerkstoff in der Saugkammer sofort abkühlt und in einen formfesten Zustand überführt wird, so nach dem Absaugen kein Lötwerkstoff unbeabsichtigt wieder an der Lötspitze austreten kann. Die vorgesehene Saugkammer wird dabei zum Absaugen von Lötwerkstoff bzw. Flußmittel mit Unterdruck beaufschlagt, so daß sie über den Zufuhrkanal oder, sofern das Handlötgerät mit der Lotkammer, der Zusatzkammer und der Saugkammer ausgerüstet ist, über einen separaten Absaugkanal Lötwerkstoff bzw. Flußmittel über die Lötspitze von der Lötstelle absaugt. Die Zusatzkammer und die Saugkammer sind vorzugsweise ebenfalls als separate Bauteile ausgeführt und im Griffteil des erfindungsgemäßen Handlötgerätes angeordnet. Die Zusatzkammer und die Saugkammer sind auswechselbar im Griffteil angeordnet, so daß die Zusatzkammer für den erneuten Einsatz wiederbefüllbar und die Saugkammer für ihren erneuten Einsatz entleerbar ist. Desweiteren kann auch der aus der Saugkammer zurückgewonnene Lötwerkstoff wieder verwendet werden.

Durch die Verwendung einer Venturi-Düse als Saugvorrichtung gemäß Anspruch 6 ist ein einfaches und sicheres Absaugen durchführbar, wobei die Ansteuerung der Venturi-Düse durch ein einfaches Druckluftventil, welches manuell oder elektrisch betätigbar sein kann, möglich ist.

Durch die Ausgestaltung gemäß Anspruch 7 ist das erfindungsgemäße Handlötgerät unabhängig von einer externen Druckluftversorgung einsetzbar.

Die Ausgestaltung gemäß Anspruch 8 ermöglicht eine kleine Ausbildung der Lötspitze, so daß das erfindungsgemäße Handlötgerät auch für den Einsatz zum Feinlöten geeignet ist.

Durch die Ausgestaltung gemäß Anspruch 9 wird erreicht, daß abgesaugter Lötwerkstoff bzw. Flußmittel nicht unbeabsichtigt in den Unterdruckkanal der Venturi-Düse eingesaugt wird. Desweiteren ist der vorgesehene Saugkolben mechanisch oder auch hydraulisch betätigbar.

Durch die Ausgestaltung gemäß Anspruch 10 wird erreicht, daß das erfindungsgemäße Handlötgerät unabhängig von einer pneumatischen oder auch hydraulischen Anlage zur Druckversorgung bzw. Unterdruckversorgung einsetzbar ist.

Gemäß Anspruch 11 ist eine einfache Bedienbarkeit des erfindungsgemäßen Handlötgerätes sichergestellt.

Gemäß der Ausgestaltungen nach den Ansprüchen 12 und 13 wird eine einfache Wartung des erfindungsgemäßen Handlötgerätes ermöglicht.

Die Ausgestaltungen gemäß den Ansprüchen 14 und 15 ermöglichen eine leichte und kleine Bauweise des erfindungsgemaßen Handlötgerätes, so daß dieses in einfacher Weise handhabbar ist.

Durch die erfindungsgemäße Ausgestaltung der elektrischen Energieversorgung der Heizvorrichtung gemäß Anspruch 16 ist eine sichere Energieversorgung der Heizvorrichtung gewährleistet, wobei gleichzeitig eine einfache Demontage des Handlötgerätes sichergestellt ist. So kann das erfindungsgemäße Handlötgerät auch von nicht speziell geschultem Bedienungspersonal gewartet werden.

Anhand der Zeichnung wird im folgenden die Erfindung näher erläutert. Es zeigt:
- Fig. 1: ein Handlötgerät in perspektivischer Explosionsdarstellung;
- Fig. 2: das Handlötgerät aus Fig. 1 im Längsschnitt;
- Fig. 3: eine Schnitt durch den Kupplungsflansch aus Fig. 1 oder 2.

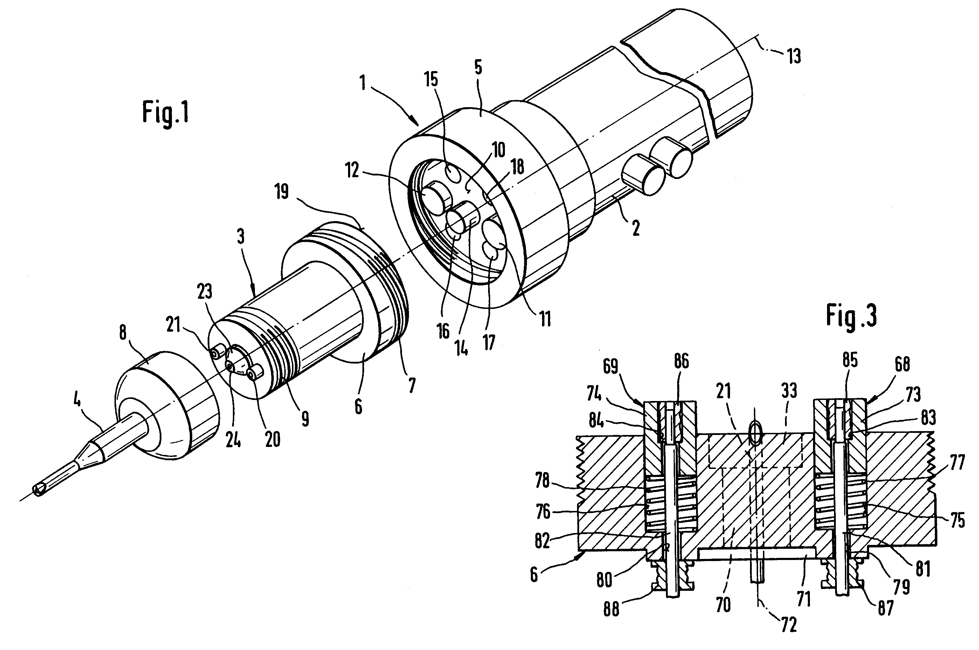

Fig. 1 zeigt ein Handlötgerät 1 bestehend aus einem Griffteil 2, einer Heizvorrichtung 3 und einer Lötspitze 4.

Das Griffteil 2 ist im wesentlichen zylindrisch ausgebildet und weist an seinem heizvorrichtungsseitigen Ende eine Überwurfmutter 5 auf, mit welcher die Heizvorrichtung 3 am Griffteil 2 fest montierbar ist. Zum Verschrauben der Heizvorrichtung 3 mit der Überwurfmutter 5 des Griffteiles 2 weist die Heizvorrichtung 3 einen radial nach außen abgesetzten Kupplungsflansch 6 auf, welcher an seiner Mantelfläche mit einem entsprechenden Schraubengewinde 7 versehen ist. Zum Befestigen der Lötspitze 4 an der Heizvorrichtung 3 ist eine zweite Überwurfmutter 8 vorgesehen, welche auf ein entsprechendes Schraubengewinde 9 am lötspitzenseitigen Ende der Heizvorrichtung 3 aufschraubbar ist.

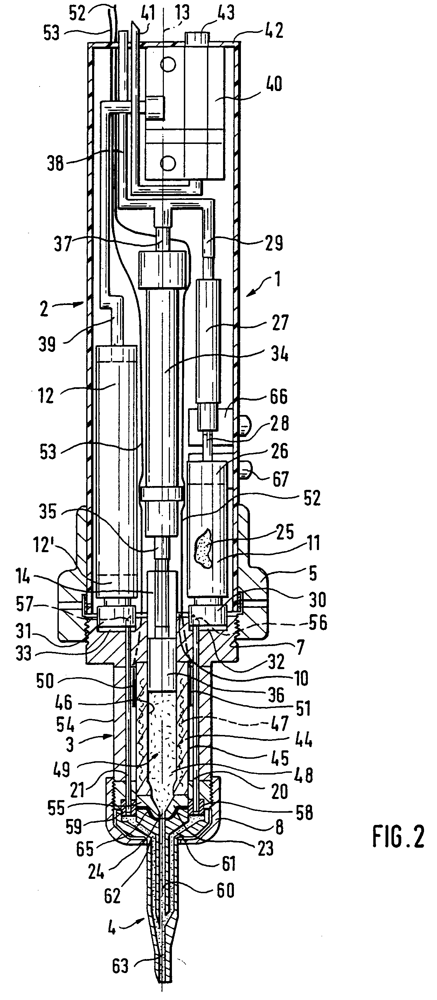

Aus der heizvorrichtungsseitigen Stirnfläche 10 des Griffteiles 2 ragen die Enden einer kartuschenartigen Zusatzkammer 11 und einer kartuschenartigen Saugkammer 12 axial hervor. Die Zusatzkammer 11 und die Saugkammer 12 sind im Griffteil 2 festsitzend und auswechselbar angeordnet. Im Zentrum der Stirnfläche 10 ist koaxial zur Längsmittelachse 13 des Griffteiles 2 ein Druckstempel 14 vorgesehen, welcher axial beweglich im Griffteil 2 geführt ist. Die Zusatzkammer 11 und die Saugkammer 12 sind sich diametral gegenüberliegend im Abstand zum Druckstempel 14 radial nach außen versetzt angeordnet. Zur Stromversorgung der Heizvorrichtung 3 und zur Temperaturregelung sind in der Stirnfläche 10 des Griffteiles 2 vier Kontaktplatten 15, 16, 17 und 18 angeordnet, welche etwa auf dem gleichen Radius wie die Zusatzkammer 11 und die Saugkammer 12 liegen. Die Kontaktplatten 15 und 16 dienen zur Stromversorgung der Heizvorrichtung 3 und übertragen die entsprechend erforderliche Betriebsspannung, welche über entsprechende durch das Griffteil verlaufende Zuführleitungen von einem separaten Steuergerät (in der Zeichnung nicht sichtbar) den Kontaktplatten 15, 16 zugeführt wird, auf zwei zugehörige Kontaktstifte (siehe Fig. 3), welche die griffteilseitige Stirnfläche 19 des Kupplungsflansches 6 der Heizvorrichtung 3 axial überragen und entgegen einer Federkraft axial verschieblich im Kupplungsflansch 6 geführt sind. In gleicher Weise überragen die Stirnflächen 19 der Heizvorrichtung 3 zwei weitere entsprechend angeordnete Kontaktstifte, welche den Kontaktplatten 17, 18 zugeordnet sind und die elektrischen Signale zweier sich im Inneren der Heizvorrichtung 3 befindlichen Temperaturmeßfühler (siehe Fig. 2 Bezugszeichen 50, 51) auf die Kontaktplatten 17 bzw. 18 übertragen. Von den Kontaktplatten 15, 16, 17, 18 führen entsprechende Signalleitungen durch das Griffteil 2 hindurch zum Steuergerät, wo die Temperatursignale von einer entsprechenden Regelelektronik zur Temperatursteuerung der Heizvorrichtung 3 verarbeitet werden und die Heizvorrichtung mit der notwendigen Betriebsspannung versorgen.

In der Heizvorrichtung 3 sind zwei rohrförmige Verbindungskanäle 20, 21 angeordnet, welche über die lötspitzenseitige Stirnseite 22 der Heizvorrichtung 3 axial hervorstehen. Der Verbindungskanal 20 dient zur Verbindung der Zusatzkammer 11 mit der Lötspitze 4 und der Verbindungskanal 21 verbindet die Saugkammer 12 mit der Lötspitze 4, wobei der Verbindungskanal 20 in einen entsprechend angeordneten Zufuhrkanal (in der Zeichnung nicht sichtbar) und der Verbindungskanal 21 in einen entsprechenden Saugkanal (in der Zeichnung nicht sichtbar) der Lötspitze 4 münden. Zwischen den Verbindungskanälen 20 und 21, welche sich diametral gegenüberliegen und parallel zur Längsmittelachse 13 des Handlötgerätes 1 verlaufen, ist eine kegelstumpfartige, axial vorspringende Erhebung 23 angeordnet, welche eine Lötwerkstoff-Zuführbohrung 24 aufweist.

Fig. 2 zeigt das Handlötgerät 1 im Längsschnitt. Im Griffteil 2 ist die Zusatzkammer 11 und die Saugkammer 12 erkennbar: Die Zusatzkammer 11 dient zur Aufnahme eines Lötzusatzes 25, wie z. B. Lötzinn, und ist mittels eines Preßkolbens 26, welcher in axialer Richtung in der Zusatzkammer 11 beweglich ist, nach oben hin abgeschlossen. Oberhalb der Zusatzkammer 11 ist ein Pneumatikzylinder 27 vorgesehen, welcher koaxial zur Zusatzkammer 11 angeordnet ist und zusatzkammerseitig eine Kolbenstange 28 aufweist. Der Pneumatikzylinder 27 dient zur Betätigung des Preßkolbens 26, indem er durch eine entsprechende Druckluft-Zufuhrleitung 29 mit Druckluft aus einem Vorratsbehälter dosiert beaufschlagbar ist und somit den Preßkolben 26 nach unten preßt, so daß Lötzusatz 25 aus der Zusatzkammer 11 in den Verbindungskanal gepreßt wird. Die Zusatzkammer 11 weist einen die Stirnfläche 10 des Griffteiles 2 axial überragenden Kupplungsabschnitt 30 auf, welcher mit einer stirnseitigen Durchstechmembran (in der Zeichnung nicht sichtbar) versehen ist.

Die Saugkammer 12 ist der Zusatzkammer 11 diametral gegenüberliegend angeordnet und weist einen die Stirnseite 10 des Griffteiles 2 überragenden Kupplungsabschnitt 31 auf, welcher ebenfalls mit einer Durchstechmembran (in der Zeichnung nicht sichtbar) versehen ist. Die Zusatzkammer 11 und die Saugkammer 12 sind im Griffteil 2 in entsprechenden Aufnahmebohrungen feststehend und auswechselbar angeordnet. Am unteren Ende des Griffteiles 2 ist die Heizvorrichtung 3 mittels der Überwurfmutter 5 angeschraubt. Zur Verschraubung mit der Überwurfmutter 5 ist am Kupplungsflansch 6 das Schraubengewinde 7 vorgesehen. Der Kupplungsflansch 6 ist mit zwei sich diametral gegenüberliegenden zylindrischen Ausnehmungen 32 und 33 versehen, in welche der jeweilige Kupplungsabschnitt 30 bzw. 31 der Zusatzkammer 11 bzw. der Saugkammer 12 im montierten Zustand mit Spiel passend hineinragen, so daß die Heizvorrichtung 3 mit ihrem Kupplungsflansch 6 unverdrehbar und in einer vorbestimmten Position am Griffteil 2 anschraubbar ist.

Im Griffteil 2 ist zwischen der Zusatzkammer 11 und der Saugkammer 12 ein zentraler koaxial zum Griffteil 2 verlaufender pneumatischer Arbeitszylinder 34 vorgesehen, welcher an seinem lötspitzenseitigen Ende mit einer Kolbenstange 35 mit dem Druckstempel 14 versehen ist. An seinem dem Druckstempel 14 gegenüberliegenden Ende weist der Arbeitszylinder 34 einen Anschlußstutzen 37 auf, mit welchem der Arbeitszylinder 34 mit einer Druckluftleitung 38 verbunden ist. Die Druckluftleitung 38 dient zur gemeinsamen Druckluftversorgung sowohl des Arbeitszylinders 34 und des Pneumatikzylinders 27 über dessen Druckluft-Zufuhrleitung 29.

Die Saugkammer 12 ist über eine Unterdruckleitung 39 mit einer Venturi-Düse 40 verbunden, welche als Saugvorrichtung zum Erzeugen eines Unterdruckes in der Saugkammer 12 dient. Die Venturi-Düse 40 ist an eine Druckluftleitung 41 angeschlossen, über welche der Venturi-Düse 40 zur Erzeugung eines Unterdruckes in der Unterdruckleitung 39 Druckluft zuführbar ist. Die beiden Druckluftleitungen 38 und 41 durchragen die hintere Gehäusewand 42 des Griffteiles 2 und sind jeweils über eine Verbindungsleitung (in der Zeichnung nicht dargestellt) dem Steuergerät verbunden. Die Venturi-Düse 40 weist einen Entlüftungsstutzen 43 auf, welcher ebenfalls die Gehäusewand 42 durchragt, so daß die der Venturi-Düse 40 zugeführte Druckluft aus der Venturi-Düse 40 nach außen frei entweichen kann. Um zu verhindern, daß beim Absaugen von Lötwerkstoff von einer Lötstelle versehentlich Lötwerkstoff in die Unterdruckleitung 39 gelangt ist in der Saugkammer 12 ein Saugkolben 12' vorgesehen, welcher beim Absaugvorgang in der Saugkammer 12 durch den Unterdruck axial in Richtung auf die Unterdruckleitung 39 bewegt wird und so Lötwerkstoff über die Lötspitze 4 in die Saugkammer 12 angesaugt wird.

In der Heizvorrichtung 3 ist ein zentrales Heizelement 44 vorgesehen, welches koaxial zur Längsmittelachse 13 verlaufend in der Heizvorrichtung 3 angeordnet und als doppelwandiges Heizrohr ausgebildet ist. Zwischen dem äußeren Heizrohr 45 und dem inneren Heizrohr 46 des Heizelementes 44 ist eine elektrische Heizwendel 47 angeordnet, welche zum Beheizen der Lötspitze 4 dient. Im inneren Heizrohr 46 ist eine Lotkammer 48 vorgesehen, welche zur Aufnahme von Lötwerkstoff 49 vorgesehen ist. Die Lotkammer 48 ist dabei mit dem Heizelement 44 thermisch gekoppelt, so daß beim Löten der Lötwerkstoff 49 in der Lotkammer 48 durch das Heizelement 44 in schmelzflüssigen Zustand bringbar ist. In der Lotkammer 48 ist ein Lötpreßkolben 36 vorgesehen welcher durch den Druckstempel 14 des Arbeitszylinders 34 zur Verringerung des Kammervolumens der Lotkammer 48 in die Lotkammer 48 axial einschiebbar ist.

An der Außenseite des äußeren Heizrohres 45 sind zwei sich diametral gegenüberliegende Temperaturmeßfühler 50 und 51 angeordnet, welche über entsprechende Signalleitungen 52 und 53 mit dem Steuergerät verbunden sind. Die Temperaturmeßfühler 50 und 51 dienen zusammen mit dem Steuergerät der Temperaturregelung des Heizelementes 44, so daß stets eine vorwählbare, optimale Löttemperatur an der Lötspitze 4 vorliegt.

Die Heizvorrichtung 3 weist ein äußeres Mantelrohr 54 auf, welches lötspitzenseitig mittels eines eingeschraubten Heizdeckels 55 verschlossen ist. Der Heizdeckel 55 ist mit der kegelartigen Erhebung 23 versehen, welche eine zentrale Lötwerkstoff-Zuführbohrung 24 aufweist, die mit der Lotkammer 48 in Verbindung steht.

Zwischen dem äußeren Mantelrohr 54 und dem äußeren Heizrohr 45 sind die beiden Verbindungskanäle 20 und 21 sich diametral gegenüberliegend angeordnet. Griffteilseitig durchragen die Verbindungskanäle 20 und 21 den Kupplungsflansch 6 im Bereich seiner beiden Ausnehmungen 32 bzw. 33, wobei sie mit scharf angeschliffenen Endspitzen 56, 57 versehen sind, mit welchen sie jeweils die Durchstoßmembran der zugehörigen Zusatzkammer 11 bzw. Saugkammer 12 beim montieren durchstoßen und somit mit dem Hohlraum der Zusatzkammer 11 bzw. der Saugkammer 12 in Verbindung stehen. Lötspitzenseitig durchragen die Verbindungskanäle 20 und 21 den Heizdeckel 55, wobei sie an ihren Enden jeweils mit einem temperaturbeständigen Dichtungszylinder 58 bzw. 59 versehen sind.

Die Lötspitze 4 ist mit der Überwurfmutter 8 auf den Heizdeckel 55 bzw. das Mantelrohr 54 der Heizvorrichtung 3 festsitzend aufgeschraubt.

In der Lötspitze 4 ist ein zentraler Lötwerkstoff-Zufuhrkanal 60 angeordnet, welcher koaxial zur Lötspitze 4 verläuft und mit der Lötwerkstoff-Zuführbohrung 24 verbunden ist. Sich radial gegenüberliegend weist die Lötspitze 4 einen Zusatzkanal 61 und einen Saugkanal 62 auf, wobei der Zusatzkanal 61 über den Verbindungskanal 20 mit der Zusatzkammer 11 und der Saugkanal 62 über den Verbindungskanal 21 mit der Saugkammer 12 verbunden ist. Der Lötwerkstoff-Zufuhrkanal 60, der Zusatzkanal 61 und der Saugkanal 62 münden in einen gemeinsamen koaxial zur Lötspitze 4 verlaufenden Endkanal 63, dessen Austrittsöffnung 64 am unteren Ende der Lötspitze 4 liegt. Im Bereich der kegelförmigen Erhebung 23 ist eine mit einer entsprechenden Durchtrittsbohrung versehene temperaturbeständige Dichtung 65 vorgesehen.

Das Griffteil 2 weist im Bereich seiner Überwurfmutter 5 zwei elektrische Tastschalter 66 und 67 auf, welche über entsprechende Verbindungsleitungen (in der Zeichnung nicht dargestellt) mit dem Steuergerät (in der Zeichnung nicht dargestellt) verbunden sind.

Mittels dieser Tastschalter 66 und 67 sind zwei im Steuergerät angeordnete elektrische Druckluftventile ansteuerbar, über welche die Druckluftleitung 38 des Pneumatikzylinders 27 und des Arbeitszylinders 34 bzw. die Druckluftleitung 41 der Venturi-Düse 40 mit Druckluft beaufschlagbar sind.

Durch Betätigen des Tastschalters 66 wird das Druckluftventil im Steuergerät für die Druckluftleitung 38 geöffnet, so daß der Pneumatikzylinder 27 bzw. der Arbeitszylinder 34 gleichzeitig mit Druckluft beaufschlagt werden und deren Kolbenstangen 28 bzw. 35 sich auf die Lötspitze 4 zubewegen und somit Flußmittel aus der Zusatzkammer 11 und Lötwerkstoff aus der Lotkammer 48 zur Lötspitze 4 hin gefördert wird. Der Lötwerkstoff gelangt dabei über die Lötwerkstoff-Zuführbohrung 24, den Lötwerkstoff-Zufuhrkanal 60 und den Endkanal 63 ans Ende der Lötspitze 4, wo er dann aus der Austrittsöffnung 64 austritt und zum Verlöten an die Lötstelle gelangt. Gleichzeitig tritt an der Austrittsöffnung 64 des Endkanals 63 Lötzusatzwerkstoff aus, welcher aus der Zusatzkammer 11 über die Verbindungsleitung 20 und den Zusatzkanal 61 in den Endkanal 63 gefördert wird. Beim Loslassen des Tastschalters 66 wird das elektrische Druckluftventil im Steuergerät geschlossen, so daß der Pneumatikzylinder 27 und der Arbeitszylinder 34 nicht weiter mit Druckluft beaufschlagt werden und somit der Fördervorgang einerseits des Lötwerkstoffes und andererseits des Lötzusatzwerkstoffes 25 unterbrochen ist.

Durch die Wahl eines entsprechend kleinen Querschnittes des Zusatzkanals 61, des Lötwerkstoff-Zufuhrkanals 60 und des Endkanals 63 wird erreicht, daß in drucklosem Zustand, d.h. bei unterbrochenem Fördervorgang aufgrund der Kapillarwirkung kein Lötwerkstoff und kein Flußmittel unbeabsichtigt aus der Austrittsöffnung 64 austreten kann.

Der zweite Tastschalter 67 dient zur Betätigung des zweiten Druckluftventiles im Steuergerät, wobei durch Öffnen dieses Druckluftventiles die Venturi-Düse 40 mit Druckluft beaufschlagt wird und in der Unterdruckleitung 39 Unterdruck erzeugt, welcher über die Saugkammer 12, den Verbindungskanal 21 und den Saugkanal 62 an der Lötspitze 4 wirksam wird, so daß mit dem Handlötgerät 1 zwei miteinander verlötete Bauteile entlötbar und voneinander trennbar sind. Zur Druckluftversorgung des Steuergerätes kann ein separater ortsfester Kompressor vorgesehen sein, welcher über entsprechende Druckluftversorgungsleitungen mit den Druckluftventilen des Steuergerätes verbunden ist.

Fig. 3 zeigt den Kupplungsflansch 6 der Heizvorrichtung 3 im Schnitt, wobei der Schnitt durch zwei der vier bereits oben erwähnten Kontaktstifte 68 und 69 gelegt ist. Die Kontaktstifte 68 und 69 sind den beiden Kontaktplatten 15 und 16 des Griffteils 2 zugeordnet und dienen zur Spannungs- bzw. Stromversorgung des Heizelementes 44. Die hinter der oben beschriebenen Schnittebene liegende Ausnehmung 33 für den Kupplungsabschnitt 31 der Saugkammer 12 sowie das obere Ende des zugehörigen Verbindungskanals 21 sind jeweils gestrichelt dargestellt. Desweiteren ist eine zentrale, koaxial im Kupplungsflansch 6 angeordnete Durchgangsbohrung 70 zur Führung des Druckstempels 14 bzw. zur Aufnahme der Lotkammer 48 erkennbar (gestrichelt dargestellt). Für die zentrale Aufnahme des Heizelementes 44 ist eine entsprechende symmetrische zur Längsmittelachse 72 des Kupplungsflansches 6 angeordnete Einsenkung 71 vorgesehen.

Die Kontaktstifte 68, 69 sind jeweils aus einer Kontaktbuchse 73 bzw. 74 gebildet, welche sich jeweils in einer griffteilseitigen Sacklochbohrung 75 bzw. 76 des Kupplungsflansches 6 über eine Schraubendruckfeder 77 bzw. 78 axial verschiebbar abstützen. Die Sacklochbohrungen 75, 76 weisen jeweils eine untere lötspitzenseitige zentrale Durchgangsbohrung 79 bzw. 80 auf, durch welche jeweils eine mit einer elektrisch isolierenden Kunststoffummantelung versehene Anschlußleitung 81 bzw. 82 zur Energieversorgung des Heizelementes 44 lötspitzenseitig nach unten hindurchgeführt sind.

Die Anschlußleitungen 81, 82 sind mit ihren oberen Enden jeweils in einer nach oben erweitert abgesetzten Durchgangsbohrung 83 bzw. 84 in den Kontaktbuchsen 73, 74 mittels einer elektrisch leitenden Klemmbuchse 85 bzw. 86 klemmend gehalten. Für die Sicherstellung einer einwandfreien elektrischen Verbindung zwischen den Klemmbuchsen 85, 86 und der zugehörigen festgeklemmten Anschlußleitung 81 bzw. 82 sind die Anschlußleitungen 81, 82 an ihren oberen in den Klemmbuchsen 85, 86 geklemmten Enden abisoliert, d.h. in diesem Bereich ist die Kunststoffummantelung entfernt. Zur Verhinderung eines Kurzschlusses zwischen den Kontaktbuchsen 73, 74 sind die Kontaktbuchsen 73, 74 oder auch die Sacklochbohrungen 75, 76 jeweils mit einer elektrisch isolierenden Kunststoffbeschichtung versehen sein. Desweiteren kann auch für den Kupplungsflansch 6 ein elektrisch nichtleitender Werkstoff vorgesehen sein.

Um zu verhindern, daß die Kontaktbuchsen 73, 74 im in Fig. 3 gezeigten demontierten Zustand der Heizvorrichtung 3 vom Griffteil 2 aus ihren Sacklochbohrungen 75, 76 herausrutschen, ist im unteren, aus dem Kupplungsflansch 6 herausragenden Bereich an jeder Anschlußleitung 81 bzw. 82 eine Klemmhülse 87 bzw. 88 vorgesehen, welche an der jeweiligen Anschlußleitung 81 bzw. 82 axial unverschieblich festgeklemmt ist. Der Abstand zwischen den Klemmbuchsen 85, 86 und den Klemmhülsen 87, 88 an den Anschlußleitungen 81, 82 ist dabei so gewählt, daß die Kontaktbuchsen 73, 74 unter leichter Vorspannung der Schraubendruckfedern 77, 78 aus der Stirnfläche 19 des Kupplungsflansches 6 axial herausragen, wobei sie mit ihrem jeweiligen unteren Ende noch sicher in ihrer jeweiligen Sacklochbohrung 75 bzw., 76 axial geführt sind.

Bei der Montage der Heizvorrichtung 3 mit ihrem Kupplungsflansch 6 am Griffteil 2 werden die Kontaktbuchsen 73, 74 entgegen der Federkräfte der Schraubendruckfedern 77, 78 in ihre jeweilige Sacklochbohrung 75, 76 eingeschoben. In montiertem Zustand drücken dabei die Schraubendruckfedern 77, 78 die Kontaktbuchsen 73, 74 gegen die jeweils zugeordnete Kontaktplatte 15 bzw. 16 des Griffteils 2, so daß eine sichere elektrische Verbindung hergestellt ist.

Es versteht sich, daß den beiden anderen Kontaktplatten 17, 18 des Griffteils ebenfalls entsprechend ausgebildete Kontaktstifte zugeordnet sind. Dabei dienen die entsprechend zugehörigen Anschlußleitungen als Signalleitungen (siehe Fig. 2 Bezugszeichen 52, 53), welche entsprechend an den Temperaturmeßfühlern 50, 51 des Heizelementes 44 angeschlossen sind.

Durch die Ausgestaltung der oben beschriebenen elektrischen Kopplung der Kontaktstifte 68, 69 mit den zugehörigen Kontaktplatten 15, 16 der Spannungsversorgung für das Heizelement, sowie die Signalübertragung von den Temperaturfühlern 50, 51 zum Steuergerät ist eine einfache Demontage und Montage des Handlötgerätes 1 zum Austauschen der Zusatzkammer 11, der Saugkammer 12 und der Lotkammer 48 durchführbar. Im montierten Zustand ist dabei stets ein sicherer elektrischer Kontakt zwischen den Kontaktstiften 68, 69 und den zugeordneten Kontaktplatten 15, 16 bzw. den Kontaktplatten 17, 18 und den in der Zeichnung nicht sichtbaren entsprechenden Kontaktstiften für die Signalleitung sichergestellt.

Im Steuergerät, welches in der Zeichnung nicht dargestellt ist, sind außer den beiden elektrischen Druckventilen auch alle notwendigen elektronischen Bauteile zur Temperaturregelung des Heizelements 44 vorgesehen. Durch die Signalleitungen werden die beim Aufheizen des Heizelementes erzeugten Signale der Temperaturfühler 50, 51 dem Steuergerät zugeführt, durch welches das Heizelement 44 angesteuert wird und auf eine einstellbare Löttemperatur aufgeheizt und bei dieser Temperatur gehalten wird.

Durch die erfindungsgemäße Ausgestaltung ist somit das Handlötgerät 1 mit einer Hand bedienbar, wobei sowohl Lötwerkstoff als auch Zusatzwerkstoff durch einfaches Betätigen des Tastschalters 66 der Lötspitze 4 und damit der Lötstelle zuführbar ist, wobei die andere Hand der Bedienungsperson zum Handhaben eines zu verlötenden Bauteiles zur Verfügung steht.

Es ist auch eine Ausführung des erfindungsgemäßen Handlötgerätes 1 vorgesehen, bei welcher zur Druckluftversorgung des Pneumatikzylinders 27 und/oder des Arbeitszylinders 34 und/oder der Venturi-Düse 40 eine im Griffteil 2 integriert angeordnete Druckluftkartusche vorgesehen ist. Anstatt der elektrischen Tastschalter 66 und 67 sind in diesem Falle entsprechende manuell bedienbare Druckluftventile vorgesehen, welche durch entsprechend im Griffteil 2 angeordnete Druckluftkanäle einerseits mit der Druckluftkartusche und andererseits mit dem Pneumatikzylinder 27 und/oder dem Arbeitszylinders 34 und/oder der Venturi-Düse 40 pneumatisch in Verbindung stehen. Damit kann das Handlötgerät unabhängig von einer ortsfesten Druckluftversorgung wie z.B. einem Kompressor eingesetzt werden. Es versteht sich, daß die Druckluftkartusche dabei auswechselbar im Griffteil befestigt ist.

Desweiteren ist auch eine hydraulische Variante des Handlötgerätes vorgesehen, deren Funktionsweise sich lediglich durch die Verwendung eines Hydrauliksystems anstatt des oben beschriebenen Pneumatiksystems vom Handlötgerät 1 unterscheidet.

Auch ist eine elektrisch betriebene Variante vorstellbar, bei welcher z.B. direkt in der Zusatzkammer und/oder der Lotkammer und/oder der Saugkammer mittels elektromotorisch angetriebener Spindeltriebe angetrieben Pumpkolben vorgesehen sind, welche über entsprechende manuell betätigbare elektrische Tastschalter im Griffteil ansteuerbar sind.

Das Handlötgerät ist desweiteren recyclinggerecht aufgebaut. Sowohl die Lötspitze 4 mit ihre Zufuhrkanälen 60, 61 bzw. ihrem Absaugkanal 62 sind austauschbar und leicht zu reinigen. Auch die Saugkammer 12, die Zusatzkammer 27 und die Lotkammer 48 sind wiederaufbereitbar bzw. wiederbefüllbar. Hierbei sei noch erwähnt, daß in der Saugkammer 12 auch eine Lötlitze vorgesehen sein kann, welche den schmelzflüssigen angesaugten Lötwerkstoff beim Erreichen der Saugkammer 12 selbständig aufsaugt, so daß auch damit sicher verhindert wird, daß Lötwerkstoff beim Absaugen unbeabsichtigt in die Unterdruckleitung angesaugt wird.

Es versteht sich, daß das erfindungsgemäße Handlötgerät auch als herkömmliches Handlötgerät einsetzbar ist, dem von außen separat Lötwerkstoff und/oder Flußmittel zuführbar ist. Auch ist es möglich die Zusatzkammer 11, die Saugkammer 12 und die Lotkammer 48 einzeln oder in unterschiedlichen Kombinationen vorzusehen, um z.B. unterschiedlichen Anforderungsprofilen bei verschiedenen Lötverfahren Rechnung zu tragen.

## Patentansprüche

1. Handlötgerät (1) bestehend aus einem wärmeisolierten Griffteil (2), einer Lötspitze (4) und einer Heizvorrichtung (3), durch welche die Lötspitze (4) auf eine bestimmte Löttemperatur aufheizbar ist, wobei im Griffteil (2) und/oder im Bereich der Heizvorrichtung (3) wenigstens zwei Aufnahmekammern (12, 27, 48) vorgesehen sind,
wobei wenigstens eine der Aufnahmekammern (27, 48) für Lötwerkstoff und/oder Flußmittel vorgesehen ist, aus welcher der Lötspitze (4) über wenigstens einen Zufuhrkanal (60, 61, 63) der Lötwerkstoff und/oder das Flußmittel dosiert zuführbar ist, und
wobei die Aufnahmekammer (27, 48) über Mittel (26, 36) verfügt, mittels welcher das Volumen der Aufnahmekammer (27, 48) zum Ausbringen von Lötwerkstoff und/oder Flußmittel verringerbar ist,
**dadurch gekennzeichnet,**
daß die andere der Aufnahmekammern als Saugkammer (12) ausgebildet ist, in welche über einen Saugkanal (62, 63) überschüssiger Lötwerkstoff und/oder überschüssiges Flußmittel von der Lötstelle absaugbar ist, und
daß zum Absaugen von Flußmittel und/oder Lötwerkstoff in der Saugkammer (12) Mittel (12') zur Vergrößerung des Volumens der Saugkammer (12) vorgesehen sind, oder
daß die Saugkammer (12) zum Absaugen von Flußmittel und/oder Lötwerkstoff mit einer Vorrichtung (40) zum Erzeugen eines Unterdruckes gekoppelt ist, und
daß die Lötspitze (4) zur gemeinsamen Aufnahme der jeweiligen Endbereiche des Zufuhrkanals (60, 61, 63) und des Saugkanals (62, 63) vorgesehen ist.

2. Handlötgerät nach Anspruch 1, dadurch gekennzeichnet,
daß die Aufnahmekammern (12, 27, 48) zylindrisch ausgebildet sind und als separate Bauteile auswechselbar im Handlötgerät (1) integriert angeordnet ist.

3. Handlötgerät nach Anspruch 1 oder 2, dadurch gekennzeichnet, daß die Heizvorrichtung (3) als doppelwandiges mit wenigstens einem Temperaturfühler (50, 51) versehenen, aus einem äußeren Heizrohr (45) und einem inneren Heizrohr (46) bestehenden Heizelement (44) ausgebildet ist, in welchem eine elektrische Heizwendel (47) angeordnet ist, und
daß eine Aufnahmekammer zur Aufnahme des Lötwerkstoffes als Lotkammer (48) zumindest teilweise in die Heizvorrichtung (3) eintaucht, und
daß eine weitere Aufnahmekammer als Zusatzkammer (27) für das Flußmittel (25) vorgesehen ist.

4. Handlötgerät nach Anspruch 3, dadurch gekennzeichnet,
daß die Lotkammer (48) und die Zusatzkammer (27) zur dosierten Abgabe des Lötwerkstoffes bzw. des Flußmittels an die Lötspitze (4) jeweils einen Preßkolben (36 bzw. 26) aufweisen, welcher jeweils mechanisch, pneumatisch oder hydraulisch in der Lotkammer (48) bzw. in der Zusatzkammer (27) verschiebbar ist.

5. Handlötgerät nach einem der Ansprüche 1 bis 4, dadurch gekennzeichnet, daß die Saugkammer (12) im Handlötgerät (1) außerhalb der Heizvorrichtung (3) angeordnet und mit einer einen Unterdruck erzeugenden Saugvorrichtung (40) verbunden ist, und
daß die Saugkammer (12) über wenigstens einen in der Lötspitze (4) mündenden Saugkanal (62) mit der Lötspitze (4) verbunden ist.

6. Handlötgerät nach Anspruch 5, dadurch gekennzeichnet,
daß die Saugvorrichtung aus einer Venturi-Düse (40) gebildet ist, welche über ein manuell oder elektrisch steuerbares Druckluftventil aus einem Druckluftvorratsbehälter mit Druckluft beaufschlagt wird und über eine Unterdruckleitung (39) in der Saugkammer (12) einen Unterdruck erzeugt.

7. Handlötgerät nach Anspruch 6, dadurch gekennzeichnet,
daß der Druckluftvorratsbehälter als Druckluftkartusche im Griffteil (2) des Handlötgerätes (1) integriert angeordnet ist und über manuell oder elektrisch ansteuerbare Druckluftventile mit der Venturi-Düse (40) und/oder mit der Lotkammer (48) und/oder mit der Zusatzkammer (27) verbunden ist.

8. Handlötgerät nach einem der Ansprüche 1 bis 7, dadurch gekennzeichnet, daß der Saugkanal (62) in der Lötspitze (4) zusammen mit dem Zufuhrkanal (60) und/oder den Zufuhrkanälen (61) der Lotkammer (48) und/oder der Zusatzkammer (27) in einen gemeinsamen Endkanal (63) münden, dessen Auslaßöffnung (64) am äußersten Ende der Lötspitze (4) angeordnet ist.

9. Handlötgerät nach einem der Ansprüche 1 bis 8, dadurch gekennzeichnet, daß in der Saugkammer (12) ein Saugkolben (12') angeordnet ist, der in der Saugkammer (12) verschiebbar ist und daß der Saugkolben (12') mechanisch, pneumatisch oder hydraulisch in der Saugkammer (12) axial bewegbar ist.

10. Handlötgerät nach einem der Ansprüche 4 bis 9, dadurch gekennzeichnet, daß der und/oder die Preßkolben (26, 36) und der Saugkolben (12') elektromotorisch über einen Spindeltrieb in der Lotkammer (48) bzw. der Zusatzkammer (27) bzw. der Saugkammer (12) bewegbar ist bzw. bewegbar sind.

11. Handlötgerät nach einem der Ansprüche 4 bis 10, dadurch gekennzeichnet, daß zur Ansteuerung der Preßkolben (26, 36) bzw. des Saugkolbens (12') jeweils manuell betätigbare elektrische Tastschalter (66, 67) und/oder Druckluftventile vorgesehen sind, welche im Bereich des vorderen zur Lötspitze (4) hin liegenden Endes des Griffteils (2) angeordnet sind.

12. Handlötgerät nach einem der Ansprüche 1 bis 11, dadurch gekennzeichnet, daß die Heizvorrichtung (3) lösbar am Griffteil(2) befestigt ist und daß die Lötspitze (4) am dem Griffteil (2) gegenüberliegenden Ende des Heizgehäuses (3) lösbar befestigt ist.

13. Handlötgerät nach Anspruch 12, dadurch gekennzeichnet, daß die Heizvorrichtung mit Verbindungskanälen (20, 21) versehen ist, welche den und/oder die Zufuhrkanäle (60, 61) und/oder den Saugkanal (62) der Lötspitze (4) mit der Lotkammer (48) und/oder der Zusatzkammer (27) und/oder der Saugkammer (12) verbinden.

14. Handlötgerät nach einem der Ansprüche 1 bis 13, dadurch gekennzeichnet, daß zur Energie- und Druckluftversorgung ein separates Steuergerät vorgesehen ist, mit welchem der Druckluftzufuhr für die Lotkammer (48) und/oder die Zusatzkammer (27) und/oder die Venturi-Düse (40) und die Temperatur des Handlötgerätes regelbar sind.

15. Handlötgerät nach Anspruch 14, dadurch gekennzeichnet, daß im Steuergerät zur Druckluftsteuerung für die Lotkammer (48), die Zusatzkammer (27) und/oder die Venturi-Düse (40) elektrisch betätigbare Druckluftventile vorgesehen sind, welche über im Griffteil (2) angeordnete, manuell bedienbare elektrische Tastschalter (66, 67) ansteuerbar sind.

16. Handlötgerät nach einem der Ansprüche 1 bis 14, dadurch gekennzeichnet, daß die Heizvorrichtung (3) zur lösbaren Befestigung am Griffteil (2) einen Kupplungsflansch (6) aufweist, über welchen sie mittels einer Überwurfmutter (8) am Griffteil (2) festsitzend befestigbar ist, und
daß zur Energieversorgung der Heizvorrichtung (3) im Griffteil (2) Kontaktplatten (15, 16) vorgesehen sind, über welche die erforderliche Betriebsspannung auf federbelastete die Heizvorrichtung (3) griffteilseitig überragende Kontaktstifte (68, 69) übertragbar ist, wobei die Kontaktstifte (68, 69) im montierten Zustand entgegen der Federkraft von Schraubendruckfedern (77, 78) in die Heizvorrichtung einschiebbar sind und gegen die Kontaktplatten (15, 16) elektrisch kontaktierend gedrückt werden.

## Claims

1. Manual soldering tool (1) comprising a heat-insulating handle (2), a soldering tip (4) and a heating device (3), by means of which the soldering tip (4) can be heated to a specific soldering temperature, wherein in the handle (2) and/or in the region of the heating device (3) at least two acceptance chambers (12, 27, 48) are provided, wherein at least one of the acceptance chambers (27, 48) is provided for solder and/or flux, from which solder and/or flux can be metered to the soldering tip (4) through at least one supply duct (60, 61, 63), and wherein the acceptance chamber (27, 48) is equipped with means (26, 36) by which the volume of the acceptance chamber (27, 48) can be reduced to supply solder and/or flux, characterised in that the other acceptance chamber is an extraction chamber (12), into which superfluous solder and/or flux can be drawn from the soldering point via an extraction duct (62, 63), and for drawing off flux and/or solder means (12') are provided in the extraction chamber (12) for increasing the volume of the extraction chamber (12), or the extraction chamber (12) for drawing off flux and/or solder is connected to a device (40) for generating a vacuum, and the soldering tip (4) is provided to receive both the end regions of the supply duct (60, 61, 63) and the extraction duct (62, 63) respectively.

2. Manual soldering tool according to claim 1, characterised in that the acceptance chambers (12, 27, 48) are cylindrical and are integrated into the manual soldering tool (1) as separate replaceable components.

3. Manual soldering tool according to claim 1 or 2, characterised in that the heating device (3) is designed as a double-walled heating element (44) with at least one temperature sensor (50, 51) and comprising an external heating pipe (45) and an internal heating pipe (46), in which heating element an electrical heating coil (47) is arranged, and an acceptance chamber for receiving the solder as a solder chamber (48) dips at least partly into the heating device (3), and a further acceptance chamber is provided as an additional chamber (27) for the flux (25).

4. Manual soldering tool according to claim 3, characterised in that the solder chamber (48) and the additional chamber (27) comprise respectively a pressing piston (36 or 26) for metering the solder or the flux to the soldering tip (4), which piston is displaceable in the solder chamber (48) or in the additional chamber (27) mechanically, pneumatically or hydraulically.

5. Manual soldering tool according to one of claims 1 to 4, characterised in that the extraction chamber (12) is arranged in the manual soldering tool (1) outside the heating device (3) and is connected with an extraction device (40) producing a vacuum, and the extraction chamber (12) is connected with the soldering tip (4) by at least one extraction duct (62) opening into the soldering tip (4).

6. Manual soldering tool according to claim 5, characterised in that the extraction device is formed by a venturi noble (40), which is pressurised with compressed air from a compressed air container via a manually or electrically operated pneumatic valve and produces a vacuum in the extraction chamber (12) via a vacuum duct (39).

7. Manual soldering tool according to claim 6, characterised in that the compressed air container is integrated as a compressed air cartridge into the handle (2) of the manual soldering tool (1), and is connected by manually or electrically driven pneumatic valves to the venturi nozzle (40) and/or the solder chamber (48) and/or the additional chamber (27).

8. Manual soldering tool according to one of claims 1 to 7, characterised in that the extraction duct (62) in the soldering tip (4) together with the supply duct (60) and/or the supply ducts (61) of the solder chamber (48) and/or the additional chamber (27) open into a common end duct (63), the outlet opening (64) of which is arranged at the outer end of the soldering tip (4).

9. Manual soldering tool according to one of claims 1 to 8, characterised in that a extraction piston (12') is arranged in the extraction chamber (12), which is displaceable in the extraction chamber (12), and the extraction piston (12') is displaceable axially in the extraction chamber (12) mechanically, pneumatically or hydraulically.

10. Manual soldering tool according to one of claims 4 to 9, characterised in that the pressing piston and/or pressing pistons (26, 36) and the extraction piston (12') can be displaced by an electric motor via a spindle drive in the solder chamber (48) or the additional chamber (27) or the extraction chamber (12).

11. Manual soldering tool according to one of claims 4 to 10, characterised in that to drive the pressing piston (26, 36) or the extraction piston (12') manually activated electrical switches (66, 67) and/or pneumatic valves are provided, which are arranged in the region of the front end of the handle (2) towards the soldering tip (4).

12. Manual soldering tool according to one of claims 1 to 11, characterised in that the heating device (3) is secured detachably to the handle (2), and the soldering tip (4) is secured detachably to the end of the heating device (3) opposite the handle (2).

13. Manual soldering tool according to claim 12, characterised in that the heating device is provided with connecting ducts (20, 21) which connect the supply duct and/or supply ducts (60, 61) and/or the extraction duct (62) of the soldering tip (4) with the solder chamber (48) and/or the additional chamber (27) and/or the extraction chamber (12).

14. Manual soldering tool according to one of claims 1 to 13, characterised in that a separate control device is provided for supplying power and compressed air with which the supply of compressed air for the solder chamber (48) and/or the additional chamber (27) and/or the venturi nozzle (40) and the temperature of the manual soldering tool can be controlled.

15. Manual soldering tool according to claim 14, characterised in that in the control device for controlling the compressed air for the solder chamber (48), the additional chamber (27) and/or the venturi nozzle (40) electrically operated pneumatic valves are provided, which can be driven by manually operated electrical switches (66, 67) arranged in the handle (2).

16. Manual soldering tool according to one of claims 1 to 14, characterised in that the heating device (3) detachably connected to the handle (2) comprises a coupling flange (6) by means of which it can be secured by a sleeve nut (8) to the handle (2), and to supply power to the heating device (3) in the handle (2) contact plates (15, 16) are provided by means of which the necessary voltage is transferred to contact pins (68, 69) projecting over the heating device (3) on the handle side, whereby the contact pins (68, 69) in the assembled stated can be pushed against the elastic force of helical compression springs (77, 78) into the heating device and pressed against the contact plates (15, 16) making electrical contact.

## Revendications

1. Appareil manuel de brasage (1) comprenant une partie poignée (2) isolée thermiquement, une pointe de brasage (4) et un dispositif de chauffage (3), par lequel la pointe de brasage (4) peut être chauffée à une température de brasage déterminée, deux compartiments de réception au moins (12, 27, 48) étant prévus dans la partie poignée (2) et/ou dans la zone du dispositif de chauffage (3),
un des compartiments de réception (27, 48) au moins étant prévu pour la matière de brasage et/ou le fondant, à partir duquel la matière de brasage et/ou le fondant peut être acheminé(e) de manière dosée jusqu'à la pointe de brasage (4) par l'intermédiaire d'au moins un canal d'alimentation (60, 61, 63), et
le compartiment de réception (27, 48) disposant de dispositifs (26, 36), au moyen desquels le volume du compartiment de réception (27, 48) peut être réduit pour chasser la matière de brasage et/ou le fondant,
**caractérisé en ce que,**
l'autre des compartiments de réception est réalisé en tant que compartiment d'aspiration (12), dans lequel la matière de brasage excédentaire et/ou le fondant excédentaire peut être aspiré(e) du point de brasage par l'intermédiaire d'un canal d'aspiration (62, 63), et
en ce que pour aspirer le fondant et/ou la matière de brasage dans le compartiment d'aspiration (12) un dispositif (12') est prévu pour augmenter le volume du compartiment d'aspiration (12),
ou
en ce que pour aspirer le fondant et/ou la matière de brasage le compartiment d'aspiration (12) est couplé avec un dispositif (40) servant à produire une dépression, et en ce que la pointe de brasage (4) est prévue pour recevoir ensemble les zones terminales respectives du canal d'alimentation (60, 61, 63) et du canal d'aspiration (62, 63).

2. Appareil manuel de brasage selon la revendication 1, caractérisé en ce que les compartiments de réception (12, 27, 48) sont cylindriques et disposés en tant que composants séparés de manière intégrée et détachable dans l'appareil manuel de brasage (1).

3. Appareil manuel de brasage selon la revendication 1 ou 2, caractérisé en ce que le dispositif de chauffage (3) est réalisé en tant qu'élément chauffant (44) à double paroi, pourvu d'au moins une sonde de température (50, 51), composé d'un tube de chauffage extérieur (45) et d'un tube de chauffage intérieur (46), dans lequel élément chauffant est disposé un filament de chauffage électrique (47), et en ce qu'un compartiment de réception destiné à recevoir la matière de brasage en tant que compartiment de brasage (48) s'enfonce au moins en partie dans le dispositif de chauffage (3), et en ce qu'un autre compartiment de réception en tant que compartiment d'apport (27) est prévu pour le fondant (25).

4. Appareil manuel de brasage selon la revendication 3, caractérisé en ce que le compartiment de brasage (48) et le compartiment d'apport (27) présentent pour la distribution dosée de la matière de brasage et du fondant à la pointe de brasage (4) un piston plongeur (respectivement 36 et 26), lequel est mécaniquement, pneumatiquement ou hydrauliquement mobile dans le compartiment de brasage (48) et dans le compartiment d'apport (27), respectivement.

5. Appareil manuel de brasage selon l'une des revendications 1 à 4, caractérisé en ce que le compartiment d'aspiration (12) est disposé dans l'appareil manuel de brasage (1) à l'extérieur du dispositif de chauffage (3) et est relié à un dispositif d'aspiration (40) produisant une dépression, et en ce que le compartiment d'aspiration (12) est relié à la pointe de brasage (4) par l'intermédiaire d'au moins un canal d'aspiration (62) débouchant dans la pointe de brasage (4).

6. Appareil manuel de brasage selon la revendication 5, caractérisé en ce que le dispositif d'aspiration est formé d'un venturi (40), lequel est alimenté en air comprimé à partir d'un réservoir d'air comprimé par l'intermédiaire d'une soupape d'air comprimé commandée manuellement ou électriquement et produit une dépression dans le compartiment d'aspiration (12) par l'intermédiaire d'une conduite de dépression (39).

7. Appareil manuel de brasage selon la revendication 6, caractérisé en ce que le réservoir d'air comprimé est disposé de manière intégrée en tant que cartouche d'air comprimé dans la partie poignée (2) de l'appareil manuel de brasage (1) et est relié au venturi (40) et/ou au compartiment de brasage (48) et/ou au compartiment d'apport (27) par l'intermédiaire de soupapes d'air comprimé commandées manuellement ou électriquement.

8. Appareil manuel de brasage selon l'une des revendications 1 à 7, caractérisé en ce que le canal d'aspiration (62) dans la pointe de brasage (4) débouche avec le canal d'alimentation (60) et/ou les canaux d'alimentation (61) du compartiment de brasage (48) et/ou du compartiment d'apport (27) dans un canal terminal commun (63), dont l'ouverture de sortie (64) est disposée à la toute extrémité de la pointe de brasage (4).

9. Appareil manuel de brasage selon l'une des revendications 1 à 8, caractérisé en ce que dans le compartiment d'aspiration (12) est disposé un piston d'aspiration (12'), qui peut être déplacé dans le compartiment d'aspiration (12) et en ce que le piston d'aspiration (12') peut être déplacé mécaniquement, pneumatiquement ou hydrauliquement de manière axiale dans le compartiment d'aspiration (12).

10. Appareil manuel de brasage selon l'une des revendications 4 à 9, caractérisé en ce que le et/ou les piston(s) plongeur(s) (26, 36) et le piston d'aspiration (12') peuvent être déplacés respectivement dans le compartiment de brasage (48) ou le compartiment d'apport (27) ou le compartiment d'aspiration (12) par moteur électrique par l'intermédiaire d'une commande à broches.

11. Appareil manuel de brasage selon l'une des revendications 4 à 10, caractérisé en ce que pour commander les pistons plongeurs (26, 36) ou le piston d'aspiration (12') des touches (66, 67) et/ou soupapes d'air comprimé électriques à commande manuelle sont prévues respectivement, lesquelles sont disposées dans la zone de l'extrémité avant de la partie poignée (2) située vers la pointe de brasage (4).

12. Appareil manuel de brasage selon l'une des revendications 1 à 11, caractérisé en ce que le dispositif de chauffage (3) est fixé de manière amovible sur la partie poignée (2) et en ce que la pointe de brasage (4) est fixée de manière amovible à l'extrémité opposée à la partie poignée (2) du boîtier de chauffage (3).

13. Appareil manuel de brasage selon la revendication 12, caractérisé en ce que le dispositif de chauffage est équipé de canaux de liaison (20, 21), lesquels font communiquer le et/ou les canaux d'alimentation (60, 61) et/ou le canal d'aspiration (62) de la pointe de brasage (4) avec le compartiment de brasage (48) et/ou le compartiment d'apport (27) et/ou le compartiment d'aspiration (12).

14. Appareil manuel de brasage selon l'une des revendications 1 à 13, caractérisé en ce que, pour l'alimentation en énergie et en air comprimé, il est prévu un appareil de commande séparé, avec lequel l'alimentation en air comprimé pour le compartiment de brasage (48) et/ou le compartiment d'apport (27) et/ou le venturi (40) et la température de l'appareil manuel de brasage peuvent être réglées.

15. Appareil manuel de brasage selon la revendication 14, caractérisé en ce que, dans l'appareil de commande, il est prévu afin de commander l'alimentation en air comprimé pour le compartiment de brasage (48), le compartiment d'apport (27) et/ou le venturi (40) des soupapes d'air comprimé pouvant être commandées électriquement, lesquelles peuvent être commandées par l'intermédiaire de touches (66, 67) électriques à commande manuelle disposées sur la partie poignée (2).

16. Appareil manuel de brasage selon l'une des revendications 1 à 14, caractérisé en ce que le dispositif de chauffage (3) présente, pour la fixation amovible sur la partie poignée (2), une bride d'accouplement (6), par l'intermédiaire de laquelle il peut être fixé de manière ajustée au moyen d'un écrou d'accouplement (8) sur la partie poignée (2), et en ce que, pour l'alimentation en énergie du dispositif de chauffage (3), il est prévu dans la partie poignée (2) des plaques de contact (15, 16), par l'intermédiaire desquelles la tension de service nécessaire peut être transmise à des fiches de contact (68, 69) à ressort dépassant du dispositif de chauffage (3) du côté de la partie poignée, les fiches de contact (68, 69) pouvant être introduites, à l'état monté, dans le dispositif de chauffage contre l'effet de ressort de ressorts de pression cylindriques (77, 78) et étant pressées contre les plaques de contact (15, 16) de manière à établir un contact électrique.
